# EUROPEAN PATENT SPECIFICATION

(11) **EP 3 895 778 B1**
(45) Date of publication and mention of the grant of the patent: **12.07.2023**
(21) Application number: 21168466.7
(22) Date of filing: 14.04.2021
(51) Int. Cl.: B01D 33/067, B01D 33/11, B01D 33/50

(54) **DRUM FILTER FOR REMOVING SOLID MATTER FROM A LIQUID, FILTER DRUM AND FLEXIBLE SEAL FOR USE IN SUCH A DRUM FILTER**
TROMMELFILTER ZUM ENTFERNEN VON FESTSTOFFEN AUS EINER FLÜSSIGKEIT, FILTERTROMMEL UND FLEXIBLE DICHTUNG ZUR VERWENDUNG IN SOLCH EINEM TROMMELFILTER
FILTRE À TAMBOUR POUR L'ÉLIMINATION DE MATIÈRES SOLIDES D'UN LIQUIDE, TAMBOUR À FILTRE ET JOINT D'ÉTANCHÉITÉ SOUPLE DE FILTRE DESTINÉ À ÊTRE UTILISÉ DANS UN TEL FILTRE À TAMBOUR

(30) Priority: 15.04.2020 NL 2025346
(43) Date of publication of application: 20.10.2021
(73) Proprietor: Bimex B.V., 5249 JR Rosmalen (NL)
(72) Inventor: MULLER, Johannes Martinus, 5249 JR Rosmalen (NL)
(74) Representative: Patentwerk B.V.

(56) References cited:
- KR-B1- 101 009 439
- SE-B- 431 063
- US-A- 4 221 390
- US-B1- 6 517 612
- US-B1- 10 293 284

## Description

The invention relates to a drum filter for removing solid matter from a liquid, comprising: a filter drum which is coated with a filter material and which has at least one open end side; a liquid supply which is connected to the inside of the filter drum; a filter housing which surrounds the filter drum and which is provided with a liquid discharge; a drive mechanism for rotating the filter drum in the filter housing about a longitudinal axis; at least one nozzle which is arranged on the outside of the filter drum and which is directed at the filter drum; and a drainage channel which is at least partially located in the filter drum and which faces towards the at least one nozzle; wherein, by way of a flexible seal, the at least one open end side of the filter drum adjoins the filter housing in a rotatable manner and so as to be liquid-tight at least over part of the circumference.

When cleaning liquids, and more particularly water such as pond water, use is made of drum filters of the type mentioned in the preamble. Document US 4,221,390 discloses such a drum filter having a seal between a surface and an edge or further surface movable with respect to the first surface in a plane parallel to it. A sealing member projects from a seal housing and can move through a predetermined distance with respect to the housing. The sealing member is resiliently urged into the position in which it projects as far as possible beyond the housing.

A drum filter is a mechanical filter by means of which soiling solid matter can be removed from the liquid in a simple manner by allowing the liquid to be cleaned to flow from the inside through the casing of the drum towards the outside, the liquid being filtered in the meantime. The typical size of the matter to be removed is for example limited to matter having a size of for example 30 to 100 microns (µm). As filter material, the casing of the drum is usually formed by a mesh fabric. After liquid to be filtered has flowed through the filter material for a certain amount of time, this filter material (specifically on the inside) will become soiled; or more specifically, the mesh fabric will become clogged, making it more difficult for liquid to pass through. At a certain point in time, it is then desirable to clean the filter material in order to thus prevent the flow rate of the drum filter from falling below a minimum value. In order to clean the filter drum, the filter drum is rotated (about its longitudinal axis) by a drive mechanism which is present for that purpose. During this rotation, a medium is sprayed with a certain amount of force onto the outside of the drum casing by one or more nozzles which are arranged on the outside of the filter drum, it being preferable here for a liquid that is identical to the liquid to be filtered to be used as cleaning medium, more particularly preferably water. Here, the at least one nozzle should however preferably be connected to a supply of at least filtered liquid. The nozzles are preferably directed at the upper side of the casing of the drum filter, and this upper side of the filter drum is thereby preferably located above the liquid level in the filter housing so that the nozzles can emit the medium emitted thereby with a relatively large force against the casing of the filter drum. This will have the result that the contamination which has accumulated on the inside of the casing of the filter drum (the filter material) will be at least partially sprayed/blown off of the inner wall. In order to now prevent the contamination that comes loose from returning back into the liquid to be cleaned, a drainage channel is provided in the filter drum, said drainage channel facing towards the nozzle(s). After having been blown off by the nozzle(s) (at least for the most part), the contamination that comes loose will thus end up in the drainage channel and therefore can be discharged from the drum filter, for example by the drainage channel being connected to a discharge system.

Drum filters of this kind have the property that the filter drum has to be able to be rotated in the filter housing during the cleaning of the filter drum by means of the nozzle(s). In order to prevent non-filtered liquid from flowing away between the open end side of the rotating filter drum and the stationary housing connected thereto towards the side of the filter drum where the filtered liquid is located, it is desirable for the intermediate spaces between the open end side of the rotating filter drum and the stationary housing connected thereto to be able to be connected to one another as well as possible in order to prevent "leakage" of non-filtered liquid. In practice, it has been found to be difficult to provide a solution for this that not only provides sufficiently good sealing but also prevents the resistance to the filter drum being able to be rotated in relation to the housing from increasing too much.

The present invention therefore provides a drum filter of the type mentioned in the preamble for removing solid matter from a liquid, wherein, by way of a flexible seal, the at least one open end side of the filter drum adjoins the filter housing in a rotatable manner and so as to be liquid-tight at least over part of the circumference, which seal is provided with a protruding edge which is located in a slot-shaped recess. Here, the slot-shaped recess may be provided in the housing, whereas the flexible seal is fastened to the circumferential edge of the open end side of the filter drum. However, the reverse state is also possible; wherein the slot-shaped recess is provided in the circumferential edge of the open end side of the filter drum and the flexible seal is fastened to the housing. One side of the flexible seal is fastened (in a stationary manner) to the filter drum or the housing. There are several possibilities as to how the flexible seal can be fastened (or secured). It is for example possible for the flexible seal to be provided with a thickened side that is clamped in, but the flexible seal may also be of "planar" configuration and thus be clamped in or be secured in a turned orientation. The use of, on the one hand, a slot-shaped opening and, on the other hand, a seal with a protruding (projecting) edge, the projecting edge of the seal extending at least partially into the slot-shaped opening, means that a good connection is produced between the mutually displaceable parts of the housing of the filter drum, as a result of which a good sealing action can be achieved. This good sealing action is moreover combined with a cleaning action of the slot-shaped opening because the protruding edge is moved through the slot-shaped opening every time the filter drum is rotated. It is also still possible for the slot-shaped opening and the protruding edge of the flexible seal to be configured such that the mutual movement of the slot-shaped opening and the protruding edge of the flexible seal results only in a small amount of additional (frictional) resistance. It is additionally noted that the filter housing is configured in such a way that all but the upper side (but preferably the entirety) of the filter drum, in a horizontal orientation in said housing, is received therein, with the result that the liquid level in the filter housing may be so high that the filter drum is located virtually completely to completely under the liquid level. The filter housing is liquid-tight but may be provided with an open upper side, or may also be covered by a removable cover, it not being necessary for the connection between the cover and the vertical walls of the filter housing to be liquid-tight.

The supply of liquid to be filtered to the inside of the filter drum is usually ensured by a supply line provided for that purpose. In this case, the liquid to be cleaned may be supplied by means of a (supply) pump, but it is also possible for the drum filter to be positioned in such a way that the water to be filtered is supplied by means of gravity.

The at least one nozzle is preferably located on the upper side of a horizontally arranged filter drum because there the filter drum will protrude above the liquid surface first, which will make it easier to clean the filter material by spraying. An additional advantage of such an arrangement of the at least one nozzle is that in this way the drainage channel may be positioned on the upper side inside the filter drum (preferably likewise above the liquid level during cleaning), as a result of which at least a large part of the contamination sprayed off of the filter material will fall into the drainage channel and can be discharged by the drainage channel (for example to a sewage system or another discharge location).

The flexible seal and the protruding edge of the flexible seal are preferably circular because this makes mutual rotation of these parts possible without said parts coming loose from one another. The shape of both the flexible seal and the protruding edge may possibly also be circular with one or more interruptions in the circle shape. Mutual rotation is also still possible with an interruption in the circle shape of the flexible seal and/or the protruding edge, and the presence of an interruption also makes it possible for dirt to be discharged from the slot-shaped opening during rotation.

In one embodiment of the drum filter according to the present invention, the protruding edge of the seal is at an angle of 0 - 20° with respect to the slot-shaped recess. Such a mutual angular positioning makes it possible to reduce the (frictional) resistance of the mutual movement of the slot-shaped opening and the protruding edge of the flexible seal.

The flexible seal may be provided with a widened base, which widened base may be adjoined by the protruding part. Such a shape of the cross section of the flexible seal makes it possible for said seal to be firmly fastened as a result of clamping of the widened base. It is also desirable for the flexible seal to be fastened in a detachable manner. This makes it possible to replace the flexible seal as soon as this is warranted, for example due to wear of the flexible seal. In order to adapt properties such as for example wear resistance, flexibility, frictional resistance and/or chemical resistance to the operating conditions, the choice of material of the flexible seal can be adapted. Thus, the flexible seal may for example be manufactured from (synthetic) rubber, Teflon, Viton, NBR, EPDM, Hythane, silicones or FKM. It is also possible for the flexible seal to be composed of a combination of several raw materials.

The filter housing may be manufactured from plastic having, inter alia, the advantage that said plastic is corrosion-resistant. On the other hand, it is also possible for the filter housing to be manufactured from a metal and/or a laminated product.

In yet another variant of the drum filter according to the present invention, the housing is provided with a sensor for determining the liquid level in the housing, and this sensor may be a pressure sensor, for example. Using such a sensor, it is for example possible to detect when the liquid level in the housing falls below a specific critical value, which may be an indication that the filter material of the filter drum is soiled in such a way that the filter material can no longer be flowed through to a sufficient extent. This is an indication that a new cleaning operation should be started, wherein the nozzle(s) is(are) used to clean the filter material by spraying.

It is optionally possible for the drum filter to also be provided with additional filter means. For additional and/or further improved cleaning of a liquid, the drum filter may be assembled with one or more other types of filter such as for example a UV filter, a biological filter and/or a coarse particle filter.

The invention also relates to a filter drum for use in a drum filter as described above, wherein the filter drum is provided with a flexible seal which is located on an open end side of the drum and which is provided with an edge which protrudes from the end side of the drum. In this case, the flexible seal may be coupled in a detachable manner in order to thus make simple installation and replacement possible. As an alternative, the filter drum may also be provided with a slot-shaped opening which is located on an open end side of the drum and which is provided in the end side. In respect of the advantages of such a filter drum, reference is made to the above-mentioned advantages of the drum filter according to the present invention, which are incorporated herein by reference, in relation to the filter drum according to the present invention.

In addition, the invention also relates to a flexible seal for use in a drum filter as described above, wherein the flexible seal is provided with a widened base, which widened base is adjoined by the protruding part. Here, too, reference is made to the above-mentioned advantages of the drum filter according to the present invention. Independently of the drum filter to which it is applied, the flexible seal may be configured for assembly with the filter drum or the filter housing, and because the seal is flexible, said seal would be expected to have to be replaced (wearing part) sooner than the other components of the drum filter during use of the drum filter.

The present invention will be explained in more detail on the basis of the nonlimiting exemplary embodiments shown in the figures below, in which:
Figure 1A shows a perspective top view of a drum filter according to the present invention;
Figure 1B shows a perspective side view of the cut-away drum filter shown in Figure 1A;
Figure 2A shows a cross-sectional view through a detail of the connection of a filter drum to a filter housing of the drum filter as shown in Figures 1A and 1B;
Figure 2B shows a cross-sectional view through a detail of an alternative embodiment variant of the connection of a filter drum to a filter housing of the drum filter as shown in Figures 1A and 1B; and
Figure 3 shows a side view of a part of a connection of a filter drum to a filter housing in a drum filter according to the present invention.

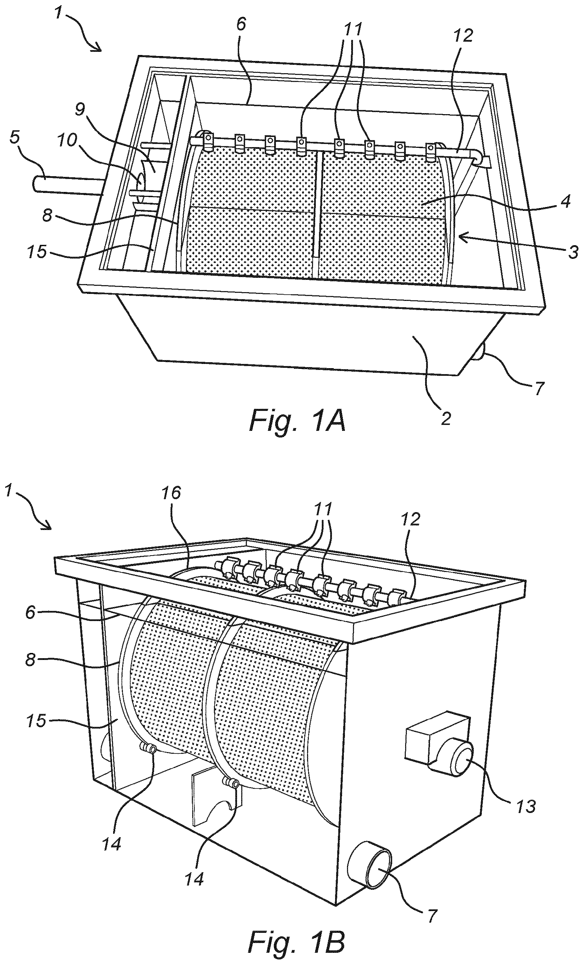

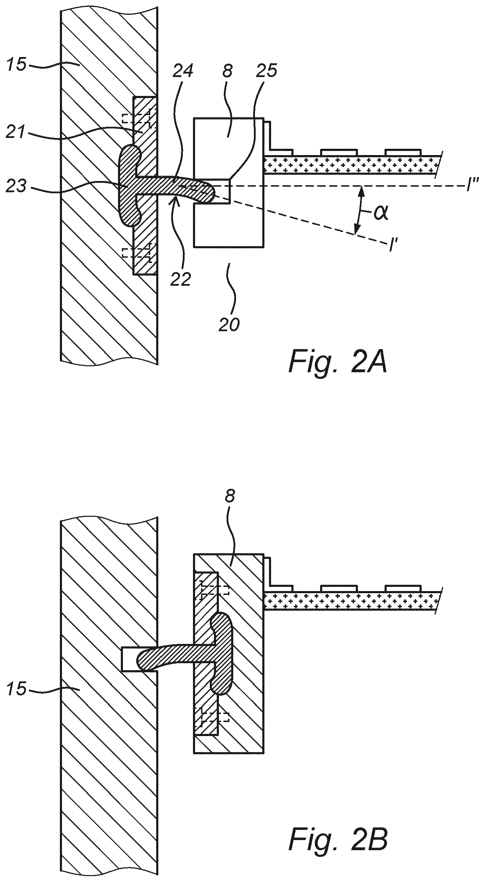

Figure 1A shows a drum filter 1 provided with a filter housing 2 in which a filter drum 3 is arranged in a horizontally rotatable manner. The cylinder casing of the filter drum 3 is coated with a filter material 4, and located in a side wall of the filter housing 2 is a liquid supply 5 by means of which liquid to be filtered can be supplied to the inside of the filter drum 3. The liquid to be filtered (on the inside of the filter drum 3) and the filtered liquid (on the outside of the filter drum 3) are located in the filter housing, in which case it is possible to see that the liquid level 6 is of such a height that the upper side of the filter drum 3 projects above the liquid surface 6. A discharge 7 for the filtered liquid is also located on the lower side of the filter housing 2. With respect to the liquid supply 5, it is noted that said liquid supply extends through the open end side 8 (which is on the left-hand side and is not visible in Figure 1A) of the filter drum 3. A drainage channel 9 also passes through this open left-hand end side 8 of the filter drum 3. By means of this drainage channel 9, dirt can be discharged to outside of the filter housing 2 (see also, in this respect, opening 10 in the filter housing 2). In order to remove the dirt that, after filtering has been performed for a certain amount of time, has accumulated on the inside of the filter material 4 of the filter drum 3 from the filter material 4 and to pass said dirt into the drainage channel 9, nozzles 11 which are directed at the cylinder wall of the filter drum 3 are provided on the outside of the filter drum 3. These nozzles 11 are fed by a (clean) liquid supply 12 in such a way that, during a cleaning operation, the nozzles can spray clean liquid onto the cylinder wall of the filter drum 3 and the dirt that comes loose is discharged from the filter housing 2 through the drainage channel 9. In order to now ensure that the entire circumference of the filter drum 3 is cleaned during the cleaning operation, the filter drum 3 has to be rotated during the cleaning. To this end, a drive mechanism 13 is positioned on the housing 2 (see Figure 1B). It is also visible in Figure 1B that the filter drum 3 is supported so as to be rotatable by means of bearing rollers 14. By way of a flexible liquid-tight seal 16, a partition 15 that makes up part of the filter housing 2 is adjoined by the open (left-hand) end side 8 of the filter drum 3 in a liquid-tight manner, which seal 16 will be explained in more detail in Figure 2.

Figure 2A shows a cross-sectional view through a detail of the connection of the end side 8 of the filter drum 3, as shown in Figures 1A and 1B, to the partition 15 that makes up part of the filter housing 2. The end side 8 of the filter drum 3 is ringshaped and provided with a central opening 20, said central opening making it possible to supply liquid to be cleaned to (see supply line 5 in the preceding figures), and to discharge loosened dirt from (see drainage channel 9 in the preceding figures), the inside of the filter drum 3. For liquid-tight and rotatable sealing of the intermediate space between the partition 15 and the end side 8 of the filter drum 3, a flexible seal 22 is fastened to the partition 15 by means of a detachable fastening ring 21. This flexible seal 22 is formed by a thickened base 23 from which an edge 24 protrudes. As an alternative, it is of course also possible for the flexible seal 22 to be produced without a thickened base 23. The protruding edge 24 of the flexible seal 22 extends partially into a slot-shaped recess 25 which interacts with the flexible seal 22 and which, to this end, is cut out in the end side 8 of the filter drum 3. Thus, the interacting flexible seal 22 and slot-shaped recess 25 provide an effective and efficient, rotatable, liquid-tight seal between the filter housing 2 and the filter drum 3. It is also visible in Figure 2A that the longitudinal line (in cross section) I' of the protruding edge 24 of the flexible seal 22 and the longitudinal line I" of the slot-shaped recess 25 enclose an angle α that is preferably between 0 and 20°.

Figure 2B shows a connection of the end side 8 of the filter drum 3, as shown in Figures 1A and 1B, similar to that shown in Figure 2A, but now in a reversed configuration: in Figure 2B, the flexible seal 22 is fastened to the end side 8 of the filter drum 3 by means of the protruding edge 24 and the slot-shaped opening 25 is cut out in the partition 15 that makes up part of the filter housing 2.

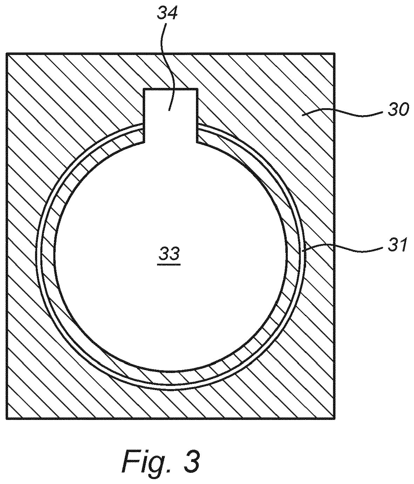

Figure 3 shows a side view of a part of a wall 30 of a filter housing 2, a slot-shaped recess 31 having been cut out in said wall (as per the situation illustrated in Figure 2B), wherein the slot-shaped recess 31 is not completely circular. The slot-shaped recess 31 has the shape of a circle segment, but the slot-shaped recess 31 may not be completely circular owing to a radial opening part 34 adjoining a central opening part 33. The radial opening part 34 in the wall 30 may for example be provided in order to facilitate the passage of the drainage channel 9 through said wall to outside of the filter housing 2 (see Figures 1A and 1B). The incomplete circle shape of the slot-shaped recess 31 may advantageously have the effect that, during the cleaning of the filter drum 3 by spraying (and thus also the simultaneous rotation thereof), the slot-shaped recess 31 and the flexible seal with a protruding edge interacting therewith (and not shown here) are also cleaned simultaneously.

It should be noted that it is not only the slot-shaped recess 31 that may have the shape of only a part of a circle (a circle segment), but this also applies to the flexible seal with a protruding edge.

## Claims

1. Drum filter (1) for removing solid matter from a liquid, comprising:
- a filter drum (3) which is coated with a filter material (4) and which has at least one open end side (8);
- a liquid supply (5) which is connected to the inside of the filter drum;
- a filter housing (2) which surrounds the filter drum (3) and which is provided with a liquid discharge (7);
- a drive mechanism (13) for rotating the filter drum (3) in the filter housing (2) about a longitudinal axis;
- at least one nozzle (11) which is arranged on the outside of the filter drum (3) and which is directed at the filter drum (3); and
- a drainage channel (9) which is at least partially located in the filter drum (3) and which faces towards the at least one nozzle (11);
wherein, by way of a flexible seal (24), the at least one open end side (8) of the filter drum (3) adjoins the filter housing (2) in a rotatable manner and so as to be liquid-tight at least over part of the circumference, **characterized in that**
the seal (22) is provided with a protruding edge (24) which is located in a slot-shaped recess (25, 31);
wherein the slot-shaped recess (25, 31) is provided in the housing (2) and the flexible seal (22) is fastened to the circumferential edge of the open end side (8) of the filter drum (3); or
wherein the slot-shaped recess (25, 31) is provided in the circumferential edge of the open end side (8) of the filter drum (3) and the flexible seal (22) is fastened to the housing (2).

2. Drum filter (1) according to claim 1, **characterized in that** the flexible seal (22) and the protruding edge (24) of the flexible seal (22) are circular.

3. Drum filter (1) according to one of the preceding claims, **characterized in that** the slot-shaped opening (25, 31) for receiving the protruding part (24) of the flexible seal (22) is circular.

4. Drum filter (1) according to one of the preceding claims, **characterized in that** the protruding edge (24) of the seal (22) is at an angle of 0 - 20° with respect to the slot-shaped recess (25, 31).

5. Drum filter (1) according to one of the preceding claims, **characterized in that** the flexible seal (22) is provided with a widened base (23), which widened base (23) is adjoined by the protruding part (24).

6. Drum filter (1) according to one of the preceding claims, **characterized in that** the flexible seal (22) is fastened in a detachable manner.

7. Drum filter (1) according to one of the preceding claims, **characterized in that** the flexible seal (22) is manufactured from a flexible sealing material such as for example a (synthetic) rubber, Teflon, Viton, NBR, EPDM, Hythane, silicones or FKM.

8. Drum filter (1) according to one of the preceding claims, **characterized in that** the filter housing (2) is manufactured from plastic.

9. Drum filter (1) according to one of the preceding claims, **characterized in that** the housing (2) is provided with a sensor for determining the liquid level in the housing (2).

10. Drum filter (1) according to one of the preceding claims, **characterized in that** the drum filter (1) is also provided with additional filter means.

## Patentansprüche

1. Trommelfilter (1) zum Entfernen von Feststoffen aus einer Flüssigkeit, umfassend:
- eine Filtertrommel (3), die mit einem Filtermaterial (4) beschichtet ist und die mindestens eine offene Endseite (8) hat,
- eine Flüssigkeitszufuhr (5), die mit dem Inneren der Filtertrommel verbunden ist,
- ein Filtergehäuse (2), das die Filtertrommel (3) umgibt und das mit einem Flüssigkeitsauslass (7) versehen ist,
- einen Antriebsmechanismus (13) zum Drehen der Filtertrommel (3) in dem Filtergehäuse (2) um eine Längsachse,
- mindestens eine Düse (11), die an der Außenseite der Filtertrommel (3) angeordnet ist und die auf die Filtertrommel (3) gerichtet ist, und
- einen Ablaufkanal (9), der mindestens teilweise in der Filtertrommel (3) angeordnet und der mindestens einen Düse (11) zugewandt ist,
wobei die mindestens eine offene Endseite (8) der Filtertrommel (3) über eine flexible Dichtung (24) drehbar und so an das Filtergehäuse (2) anschließt, dass sie mindestens über einen Teil des Umfangs flüssigkeitsdicht ist, **dadurch gekennzeichnet, dass**
die Dichtung (22) mit einem vorragenden Rand (24) versehen ist, der in einer schlitzförmigen Aussparung (25, 31) angeordnet ist,
wobei die schlitzförmige Aussparung (25, 31) in dem Gehäuse (2) vorgesehen ist und die flexible Dichtung (22) an dem Umfangsrand der offenen Endseite (8) der Filtertrommel (3) befestigt ist oder
wobei die schlitzförmige Aussparung (25, 31) in dem Umfangsrand der offenen Endseite (8) der Filtertrommel (3) vorgesehen ist und die flexible Dichtung (22) an dem Gehäuse (2) befestigt ist.

2. Trommelfilter (1) nach Anspruch 1, **dadurch gekennzeichnet, dass** die flexible Dichtung (22) und der vorragende Rand (24) der flexiblen Dichtung (22) kreisförmig sind.

3. Trommelfilter (1) nach einem der vorhergehenden Ansprüche, **dadurch gekennzeichnet, dass** die schlitzförmige Öffnung (25, 31) zur Aufnahme des vorragenden Teils (24) der flexiblen Dichtung (22) kreisförmig ist.

4. Trommelfilter (1) nach einem der vorhergehenden Ansprüche, **dadurch gekennzeichnet, dass** der vorragende Rand (24) der Dichtung (22) einen Winkel von 0 - 20° zu der schlitzförmigen Aussparung (25, 31) einnimmt.

5. Trommelfilter (1) nach einem der vorhergehenden Ansprüche, **dadurch gekennzeichnet, dass** die flexible Dichtung (22) mit einer verbreiterten Basis (23) versehen ist, wobei der vorragende Teil (24) an die verbreiterte Basis (23) anschließt.

6. Trommelfilter (1) nach einem der vorhergehenden Ansprüche, **dadurch gekennzeichnet, dass** die flexible Dichtung (22) auf lösbare Art befestigt ist.

7. Trommelfilter (1) nach einem der vorhergehenden Ansprüche, **dadurch gekennzeichnet, dass** die flexible Dichtung (22) aus einem flexiblen Material wie beispielsweise einem (synthetischen) Kautschuk, Teflon, Viton, NBR, EPDM, Hythan, Silikonen oder FKM hergestellt ist.

8. Trommelfilter (1) nach einem der vorhergehenden Ansprüche, **dadurch gekennzeichnet, dass** das Filtergehäuse (2) aus Kunststoff hergestellt ist.

9. Trommelfilter (1) nach einem der vorhergehenden Ansprüche, **dadurch gekennzeichnet, dass** das Gehäuse (2) mit einem Sensor zum Bestimmen des Flüssigkeitspegels in dem Gehäuse (2) versehen ist.

10. Trommelfilter (1) nach einem der vorhergehenden Ansprüche, **dadurch gekennzeichnet, dass** der Trommelfilter (1) auch mit zusätzlichen Filtermitteln versehen ist.

## Revendications

1. Filtre à tambour (1) pour éliminer une matière solide à partir d'un liquide, comprenant :
- un tambour filtrant (3) qui est enduit avec un matériau filtrant (4) et qui a au moins un côté ouvert (8) ;
- une alimentation en liquide (5) qui est raccordée à l'intérieur du tambour filtrant ;
- un logement de filtre (2) qui entoure le tambour filtrant (3) et qui est pourvu d'une évacuation de liquide (7) ;
- un mécanisme d'entraînement (13) pour mettre en rotation le tambour filtrant (3) dans le logement de filtre (2) autour d'un axe longitudinal ;
- au moins une buse (11) qui est agencée sur l'extérieur du tambour filtrant (3) et qui est dirigée vers le tambour filtrant (3) ; et
- un canal de drainage (9) qui est au moins partiellement situé dans le tambour filtrant (3) et qui est tourné vers l'au moins une buse (11) ;
dans lequel, par le biais d'un joint d'étanchéité flexible (24), l'au moins un côté ouvert (8) du tambour filtrant (3) jouxte le logement de filtre (2) de manière rotative et afin d'être étanche aux liquides au moins sur une partie de la circonférence, **caractérisé en ce que**
le joint d'étanchéité (22) est pourvu d'un bord saillant (24) qui est situé dans un évidement en forme de fente (25, 31) ;
dans lequel l'évidement en forme de fente (25, 31) est prévu dans le boîtier (2) et le joint d'étanchéité flexible (22) est fixé au bord circonférentiel du côté ouvert (8) du tambour filtrant (3) ; ou
dans lequel l'évidement en forme de fente (25, 31) est prévu dans le bord circonférentiel du côté ouvert (8) du tambour filtrant (3) et le joint d'étanchéité flexible (22) est fixé au boîtier (2).

2. Filtre à tambour (1) selon la revendication 1, **caractérisé en ce que** le joint d'étanchéité flexible (22) et le bord saillant (24) du joint d'étanchéité flexible (22) sont circulaires.

3. Filtre à tambour (1) selon l'une des revendications précédentes, **caractérisé en ce que** l'ouverture en forme de fente (25, 31) pour recevoir la partie saillante (24) du joint d'étanchéité flexible (22) est circulaire.

4. Filtre à tambour (1) selon l'une des revendications précédentes, **caractérisé en ce que** le bord saillant (24) du joint d'étanchéité (22) est à un angle de 0 à 20 ° par rapport à l'évidement en forme de fente (25, 31).

5. Filtre à tambour (1) selon l'une des revendications précédentes, **caractérisé en ce que** le joint d'étanchéité flexible (22) est pourvu d'une base élargie (23), laquelle base élargie (23) est jouxtée par la partie saillante (24).

6. Filtre à tambour (1) selon l'une des revendications précédentes, **caractérisé en ce que** le joint d'étanchéité flexible (22) est fixé de manière détachable.

7. Filtre à tambour (1) selon l'une des revendications précédentes, **caractérisé en ce que** le joint d'étanchéité flexible (22) est fabriqué à partir d'un matériau d'étanchéité flexible tel que, par exemple, un caoutchouc (synthétique), du Téflon, Viton, NBR, EPDM, Hythane, silicones ou FKM.

8. Filtre à tambour (1) selon l'une des revendications précédentes, **caractérisé en ce que** le logement de filtre (2) est fabriqué à partir de plastique.

9. Filtre à tambour (1) selon l'une des revendications précédentes, **caractérisé en ce que** le boîtier (2) est pourvu d'un capteur pour déterminer le niveau de liquide dans le boîtier (2).

10. Filtre à tambour (1) selon l'une des revendications précédentes, **caractérisé en ce que** le filtre à tambour (1) est également pourvu de moyens filtrants supplémentaires.
